Europäisches Patentamt

European Patent Office

Office européen des brevets

(19)

(11) **EP 0 951 162 A2**

(12) **EUROPÄISCHE PATENTANMELDUNG**

(43) Veröffentlichungstag:
20.10.1999 Patentblatt 1999/42

(51) Int. Cl.⁶: **H04M 1/27**

(21) Anmeldenummer: 99106638.2

(22) Anmeldetag: 31.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 16.04.1998 DE 19816933

(71) Anmelder:
NOKIA MOBILE PHONES LTD.
02150 Espoo (FI)

(72) Erfinder:
• Theimer, Wolfgang
  44795 Bochum (DE)
• Görtz, Udo
  44797 Bochum (DE)
• Salomäki, Ari
  44866 Bochum (DE)

(74) Vertreter:
TER MEER STEINMEISTER & PARTNER GbR
Mauerkircherstrasse 45
81679 München (DE)

(54) **Verfahren zum Steuern einer elektronischen Einrichtung, insbesondere einer Mobilstation eines Mobilfunknetzes**

(57)     Die Erfindung betrifft ein Verfahren zum Steuern einer elektronischen Einrichtung, insbesondere einer Mobilstation eines Mobilfunknetzes. Um eine einfache und flexible Steuerung zu ermöglichen, ist vorgesehen, daß ein Laut variiert wird, um unter einer Mehrzahl von vorgegebenen Möglichkeiten zu wählen.

*FIG.7*

**Beschreibung**

Die Erfindung betrifft ein Verfahren zum Steuern einer elektronischen Einrichtung, Insbesondere einer Mobilstation eines Mobilfunknetzes.

Elektronische Einrichtungen wie z.B. Personalcomputer (PC) werden üblicherweise durch die Eingabe von Befehlen über eine Tastatur oder durch Auswählen von Befehlen aus entsprechenden Menüs mit Hilfe einer Maus gesteuert. Darüber hinaus existieren bereits Steuerprogramme für PCs, die auf akustische Sprachbefehle reagieren.

Zur Steuerung eines Computers über Sprachbefehle ist es dabei erforderlich, daß die akustische Eingabeeinrichtung eine vorzugsweise lernfähige Spracherkennungseinheit aufweist, die die gesprochenen Wörter analysiert und mit den gespeicherten Sprachbefehlen vergleicht, um bei Übereinstimmung eines gesprochenen Worts mit einem gespeicherten Sprachbefehl die Ausführung des entsprechenden Befehls zu veranlassen.

Diese bekannte Steuerung eines PCs per Sprachbefehl hat zwar den Vorteil, daß der Benutzer dabei die Hände für andere Aufgaben frei hat, verlangt jedoch von ihm, daß er die gewünschten Befehle genau kennt. Die Suche nach einem nicht bekannten, aber vermuteten Befehl, wie sie beispielsweise häufig mit der Maus durchgeführt wird, ist mit Sprachbefehlen praktisch nicht möglich.

Bei festen Telefonnetzen ist es außerdem bekannt, den einzelnen Ziffern von 0 bis 9 entsprechend dem DTMF-(Dual Tone Multi Frequency)-Verfahren Töne zuzuordnen, um beim Wählen einer Telefonnummer die gewählte Telefonnummer als entsprechende Tonfolge zu übertragen.

Die Zuordnung von Ziffern zu Tönen wird beispiels weise auch bei der Fernabfrage von Anrufbeantwortern verwendet, um entsprechende Zifferncodes über die fest installierten Telefonleitungen zu übertragen.

Die Erzeugung der einzelnen Töne für das Tonwahlverfahren und die Fernabfrage bei Anrufbeantwortern erfolgt üblicherweise durch entsprechende Tongeneratoren, die wiederum über eine entsprechende Tastatur bedient werden müssen.

Bei Mobilstationen eines Mobilfunknetzes, also bei Mobiltelefonen erfolgt die Bedienung bisher üblicherweise über die Telefontastatur und entsprechende zusätzliche Funktionstasten. Mobiltelefone weisen dabei nur einen beschränkten Platz für die Anordnung von zusätzlichen Bedienungstasten auf, so daß zusätzliche Funktionen, die im Hinblick auf die fortschreitende Miniaturisierung der elektronischen Bauteile ohne weiteres integriert werden könnten, nur mit Schwierigkeiten vorgesehen werden können.

Mit Hilfe einer akustischen Befehlseingabe wäre es möglich, hier Abhilfe zu schaffen, um im Mobiltelefon zusätzliche die Benutzerfreundlichkeit verbessernde Funktionen bereitzustellen.

Auch bei Fahrzeugnavigationssystemen ließe sich die Auswahl von Zieladressen, also von Ort, Straße, Hausnummer, und gegebenenfalls auch die Auswahl von Verkehrsleitinformationen, also die Auswahl von zur Verfügung stehenden Alternativstrecken, wie beispielsweise Autobahnen oder Autobahnabschnitten, durch eine akustische Steuerung vereinfachen.

Davon ausgehend liegt der Erfindung die Aufgabe zugrunde, ein Verfahren zum Steuern einer elektronischen Einrichtung, Insbesondere einer Mobilstation eines Mobilfunknetzes, bereitzustellen, das einem Benutzer die Möglichkeit gibt, eine akustische Steuerung auf einfache Weise mit seiner Stimme durchzuführen.

Diese Aufgabe wird durch das Verfahren nach Anspruch 1 gelöst.

Erfindungsgemäß ist also vorgesehen, daß zum Steuern einer elektronischen Einrichtung oder eines Mobiltelefons ein Laut variiert wird, um unter einer Mehrzahl von vorgegebenen Möglichkeiten zu wählen. Die vorgegebenen Möglichkeiten können dabei einzelne Steuerbefehle aus einem Benutzermenü, einzelne Datensätze aus gespeicherten Listen, wie beispielsweise aus einem Telefonnummernverzeichnis, oder die einzelnen Werte kontinuierlich änderbarer Parameter sein.

Bei dem erfindungsgemäßen Verfahren kann also ein Benutzer durch die Variation eines mit seiner Stimme erzeugten Lautes wie mit einem Rollbalken oder Scrollbar aus einer Liste von Möglichkeiten eine auswählen oder einen kontinuierlichen Parameter einstellen.

Bei Mobiltelefonen läßt sich beispielsweise das erfindungsgemäße Verfahren einsetzen, um zum Wählen einer Telefonnummer einen gewünschten Gesprächspartner anhand einer Namensliste aus einem Telefonverzeichnis auszuwählen, so daß dann die entsprechende Telefonnummer gewählt werden kann.

Das erfindungsgemäße Verfahren läßt sich aber auch beispielsweise zur Fernbedienung von Rundfunk- oder Fernsehgeräten einsetzen, um beispielsweise einen Sender auszuwählen oder die Wiedergabelautstärke einzustellen.

Bei einer vorteilhaften Ausgestaltung der Erfindung ist vorgesehen, daß die vorgegebenen Möglichkeiten einem einstellbaren Tonhöhenbereich zwischen einem tiefsten und einem höchsten Ton sequentiell zugeordnet sind und daß der Laut im eingestellten Tonhöhenbereich in seiner Tonhöhe variiert wird. Alternativ dazu oder zusätzlich ist es zweckmäßig, daß die vorgegebenen Möglichkeiten verschiedenen Klängen zugeordnet sind und daß der Laut in seinem Klang variiert wird.

Eine spezielle Ausgestaltung der Erfindung zeichnet sich dadurch aus, daß verschiedene Gruppen von vorgegebenen Möglichkeiten verschiedenen Klängen zugewiesen sind, während die einzelnen Möglichkeiten jeder Gruppe

2

einzelnen Tonhöhen In einem eingestellten Tonhöhenbereich zugeordnet sind, und daß zum Auswählen einer Gruppe von vorgegebenen Möglichkeiten zunächst der Klang und dann zum Auswählen einer Möglichkeit aus der ausgewählten Gruppe die Tonhöhe des Lautes variiert wird.

Für den Fall, daß nur eine aus einer einzigen Liste von Möglichkeiten, also beispielsweise ein Datensatz oder ein Steuerbefehl aus einer entsprechenden Daten- oder Befehlsliste ausgewählt werden soll oder daß nur ein einziger Parameter einzustellen ist, eignet sich besonders gut die Variation der Tonhöhe, da es für einen Benutzer üblicherweise sehr einfach ist die Tonhöhe mit seiner Stimme bewußt zu variieren. Die Variation des Klangs eines mit der Stimme erzeugten Lautes ist besonders dann zweckmäßig, wenn die Auswahl nur unter wenigen Möglichkeiten zu treffen ist. Sollen beispielsweise nur einzelne Steuerbefehle ausgewählt werden, so ist es denkbar, jedem Steuerbefehl den Klang eines Vokals zuzuweisen. Bei mehr als acht Wahlmöglichkeiten ist es zwar immer noch möglich, die Auswahl über eine Klangvariation des Lauts durchzuführen, indem Zwischenklänge zwischen den Vokalen artikuliert werden, jedoch ist in diesem Falle die Tonhöhenvariation vorzuziehen.

Die Variation sowohl der Tonhöhe als auch des Klanges eines mit der menschlichen Stimme erzeugten Lautes eröffnet die Möglichkeit einer zweidimensionalen Suche, Indem beispielsweise zunächst über den Klang eine von mehreren Listen oder einer von mehreren Parametern ausgewählt wird, um dann mit einer Variation der Tonhöhe eine bestimmte Möglichkeit aus der Liste auszuwählen oder einen bestimmten Parameterwert einzustellen.

Um eine echte Zweidimensionalität der Auswahl einer Möglichkeit aus einer Vielzahl von zweidimensional strukturierten Möglichkeiten zu schaffen, wie sie beispielsweise mit einer üblichen Computermaus möglich ist, ist erfindungsgemäß vorgesehen, daß zum Auswählen einer Möglichkeit aus einer Mehrzahl von zweidimensional vorliegenden Möglichkeiten gleichzeitig der Klang und die Tonhöhe des Lautes variiert werden.

Die gleichzeitige Variation von Klang und Tonhöhe eines Lautes ermöglicht es dem Benutzer, insbesondere dem geübten Benutzer sofort auf die auszuwählende Möglichkeit akustisch zuzugreifen, ohne erst durch Klangvariation in der einen Richtung und dann durch Tonhöhenvariation in der anderen Richtung suchen zu müssen.

Für die praktische Anwendung ist erfindungsgemäß vorgesehen, daß die vorgegebenen Möglichkeiten Steuerbefehle sind, die gruppenweise in Menüs zusammengefaßt sind und/oder daß die vorgegebenen Möglichkeiten Daten sind, die in Listenform gespeichert sind.

Insbesondere bei der Fernsteuerung eines elektronischen Geräts, bei dem ein oder mehrere Parameter einzustellen sind, ist es vorteilhaft, wenn die zu wählenden Möglichkeiten von einstell- und auswählbaren Werten des oder der Parameter für den Betrieb der elektronischen Einrichtung gebildet werden. Diese Weiterbildung der Erfindung ist insbesondere dann zweckmäßig, wenn bei der Benutzung oder Handhabung des elektronischen Geräts vom Benutzer mehr oder weniger gleichzeitig mehrere Parameter einzustellen sind, während er ein von dem elektronischen Gerät versorgtes Werkzeughandhabt und daher keine Hand zum Einstellen frei hat. In diesem Fall hat das erfindungsgemäße Verfahren, das die Variation eines Lautes nutzt, gegenüber mit Sprachbefehlen arbeitenden Verfahren den Vorteil, daß die Parametereinstellung über die Lautvariation nicht irrtümlicherweise als Anweisung an einen Helfer aufgefaßt wird, wie dies bei einer Steuerung über Sprachbefehle vorkommen könnte.

Um es dem Benutzer zu ermöglichen, seine Auswahl zu kontrollieren ist es bei einer zweckmäßigen Ausgestaltung der Erfindung vorgesehen, daß die erfolgte Auswahl einer Möglichkeit durch Wiederholung des die Auswahl festlegenden Lauts durch die elektronische Schalteinrichtung bestätigt wird, wobei bei der Bestätigung der Auswahl zusätzlich zum Bestätigungslaut der eingestellte Tonhöhen- und/oder Klangbereich durch deren Randwerten entsprechenden Laute oder Töne angezeigt wird. Um die Bedienungssicherheit weiter zu vergrößern, ist vorgesehen, daß die erfolgte Auswahl durch Anzeige oder Ansage der ausgewählten Möglichkeit bestätigt wird.

Um aus einer großen Anzahl von Möglichkeiten, beispielsweise aus einem umfangreichen Telefonnummernverzeichnis eine Möglichkeit, also einen Namen mit zugeordneter Telefonnummer, auszuwählen, ist es vorgesehen, daß zunächst aus einer Vielzahl von Möglichkeiten eine Gruppe von einzelnen Möglichkeiten durch Laut-Variation ausgewählt wird, und daß dann ausgehend von der ausgewählten Gruppe von Möglichkeiten die gewünschte Möglichkeit ausgewählt wird. Diese zweistufige Auswahl, bei der zunächst ein bestimmter Listen- oder Parameterbereich ausgewählt wird, und diesen dann für die zweite Auswahl wie mit einer Lupe zu vergrößern. hat den Vorteil, daß die Auswahl sehr schnell und trotzdem mit hoher Genauigkeit durchgeführt werden kann, da beim zweiten Auswahlschritt dem gesamten Laut-Variationsbereich nur noch relativwenig Möglichkeiten zugeordnet werden.

Dabei besteht auch die Möglichkeit, daß die Auswahl der gewünschten Möglichkeit ausgehend von der vorausgewählten Gruppe von Möglichkeiten manuell erfolgt. Die Kombination von akustischer und manueller Auswahl einer Möglichkeit aus einer Liste von Möglichkeiten ermöglicht eine besonders einfache Implementierung des erfindungsgemäßen Verfahrens und weist darüber hinaus eine hohe Benutzerfreundlichkeit auf, da das erfindungsgemäße Verfahren durch die Kombination mit der manuellen Suche auch in einer relativ lauten Umgebung zuverlässig eingesetzt werden kann.

Eine zweckmäßige Weiterbildung der Erfindung zeichnet sich dadurch aus, daß zum Erkennen einer Auswahl zunächst die akustische Energie erfaßt und mit einem Referenzwert verglichen wird, um einen Laut als solchen zu erkennen, und daß nach Erkennen eines Lautes dessen Tonhöhe und/oder dessen Klang festgestellt wird, um dann in Abhängigkeit davon die zugeordnete Möglichkeit anzuzeigen oder anzusagen. Dabei ist es vorteilhaft, wenn die Tonhöhe und/oder der Klang des Lautes fortlaufend festgestellt wird, und die vorgegebenen Möglichkeiten sequentiell entsprechend der Tonhöhen- oder Klangänderung anzuzeigen oder zur Anzeige bereitzustellen.

Um es jedem Benutzer zu ermöglichen, den Variationsumfang seiner Stimme optimal ausnutzen zu können, zeichnet sich eine besonders bevorzugte Ausgestaltung der Erfindung dadurch aus, daß der Tonhöhen- und/oder Klangbereich für jeden Benutzer individuell einstellbar ist.

Die Erfindung wird im folgenden beispielsweise anhand der Zeichnung näher erläutert. Es zeigen:

**Fig. 1** ein stark vereinfachtes schematisches Blockschaltbild einer elektronischen Einrichtung zur Durchführung des erfindungsgemäßen Verfahrens,

**Fig. 2** ein Diagramm zur Erläuterung der Zuordnung einzelner Daten einer Liste zu einem Frequenzbereich,

**Fig. 3** ein Diagramm zur Erläuterung der Zuordnung einzelner Parameterwerte zu einem Frequenzbereich,

**Fig. 4** ein Frequenz-Frequenz-Diagramm zur Erläuterung einer Frequenzfilterung entsprechend einem eingestellten Frequenzbereich,

**Fig. 5** ein Frequenz-Zeit-Diagramm zur Veranschaulichung eines möglichen Frequenzverlaufs beim Auswählen einer Möglichkeit,

**Fig. 6** ein Diagramm zur Erläuterung einer zweidimensionalen Auswahl,

**Fig. 7** ein vereinfachtes Flußdiagramm eines ersten, erfindungsgemäßen Verfahrens zum Steuern einer elektronischen Einrichtung,

**Fig. 8** ein vereinfachtes Flußdiagramm eines weiteren erfindungsgemäßen Verfahrens und

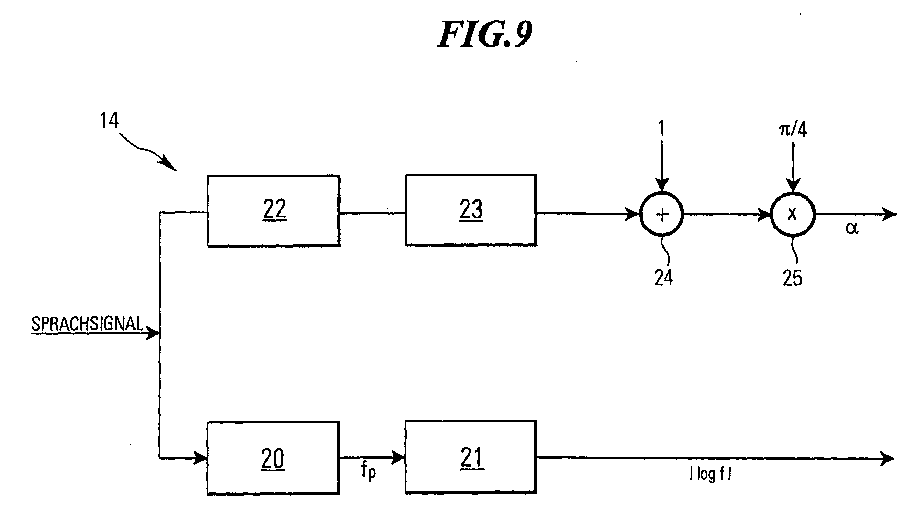

**Fig. 9** zeigt ein vereinfachtes schematisches Blockdiagramm einer Schaltung zur Bestimmung eines Frequenzvektors bei der zweidimensionalen Auswahl.

In den verschiedenen Figuren der Zeichnung sind einander entsprechende Elemente mit gleichen Bezugszeichen versehen.

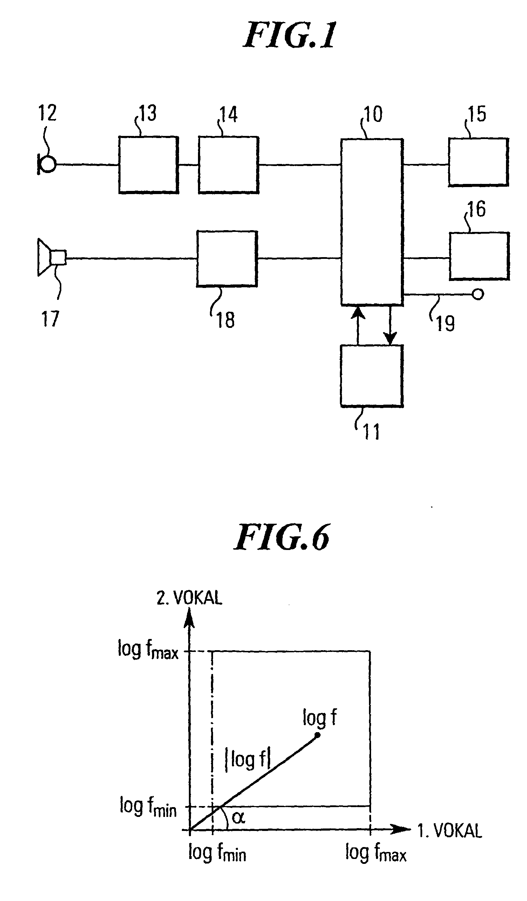

Eine elektronische Einrichtung zur Durchführung des erfindungsgemäßen Verfahrens weist, wie Figur 1 zeigt, eine zentrale Steuereinheit 10, beispielsweise einen Mikroprozessor oder dergleichen, auf, der ein Speicher 11 zugeordnet ist. Ein Mikrophon 12 ist als akustische Eingabevorrichtung über eine Schwellwertschaltung 13 und eine Lauterkennungsschaltung 14 an die zentrale Steuereinheit 10 angeschlossen. Die Lauterkennungsschaltung 14 umfaßt dabei in nicht näher dargestellter Weise eine Frequenzerfassungsschaltung zum Feststellen der Tonhöhe eines erfaßten Lauts und/oder eine Klangcharakteristik-Erfassungsschaltung zum Feststellen des Klanges eines erfaßten Lauts. Daneben ist zweckmäßigerweise eine übliche Eingabeeinheit 15, z.B. eine Tastatur oder eine Maus mit der Steuereinheit 10 verbunden.

Zur Ausgabe von Daten und Signalen ist einerseits eine optische Anzeigeeinheit 16 vorgesehen, die in bekannter Weise als Flüssigkristallanzeige oder Leuchtdiodenanzeige ausgebildet sein kann. Andererseits ist als akustische Ausgabeeinheit ein Lautsprecher 17 vorgesehen, der über einen entsprechenden Lautsprechertreiber 18 von der zentralen Steuereinheit 10 angesteuert werden kann.

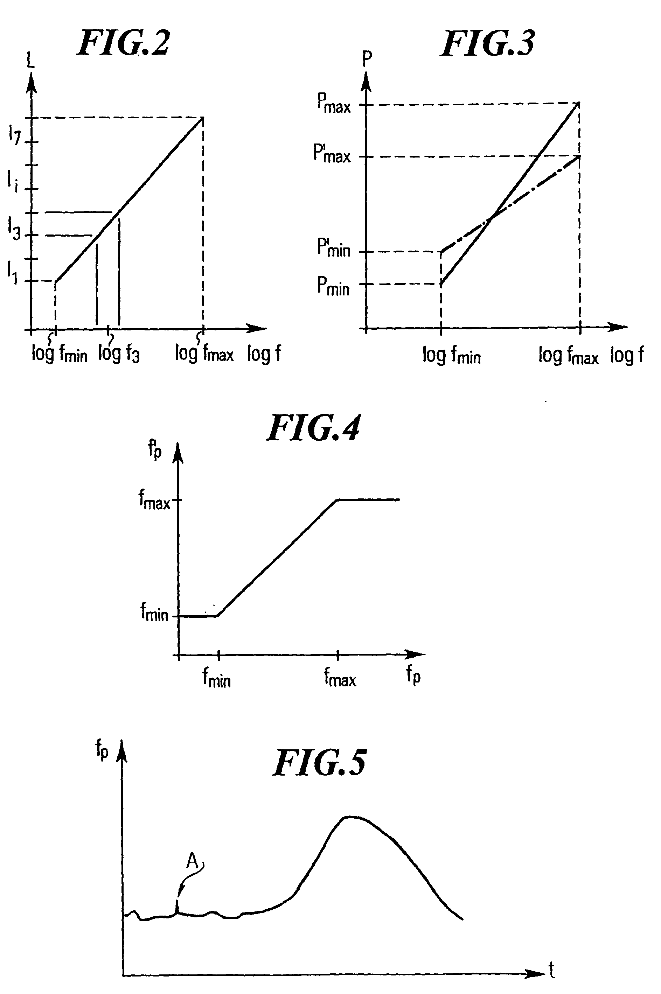

Um eine geordnete Liste von Möglichkeiten, beispielsweise eine alphabetisch geordnete Liste von Namen mit zugeordneten Telefonnummern oder dergleichen oder eine Liste von Steuerbefehlen mit Hilfe des erfindungsgemäßen Verfahrens entsprechend einem Scrollbar oder Rollbalken zum Auswählen einer der vorgegebenen Möglichkeiten durchsuchen zu können, ist es erforderlich, daß der Variationsbereich einer veränderbaren Eigenschaft des Lauts den vorgegebenen Möglichkeiten der Liste definiert zugeordnet ist. Im folgenden wird anhand von Figur 2 die Zuordnung der einzelnen Möglichkeiten einer Liste zur Frequenz f der Tonhöhe erläutert.

Um dazu zunächst einen in Frage kommenden Frequenzbereich festzulegen, singt der Benutzer den tiefsten und den höchsten Ton, den er ohne Anstrengung singen kann. Die Frequenz $f_{max}$ des höchsten Tons und die Frequenz $f_{min}$ des tiefsten Tons legen dabei den zur Verfügung stehenden Tonhöhenbereich fest, dem die vorgegebenen Möglichkeiten $l_1, l_2 \ldots l_i, \ldots l_n$ der geordneten Liste L eindeutig zuzuordnen sind. Wie Figur 2 zeigt, werden die einzelnen Möglichkeiten $l_i$ einer logarithmischen Frequenzskala log f zugeordnet, die entsprechend der Anzahl n der vorgegebenen Möglichkeiten in einzelne Abschnitte unterteilt wird. Jeder einzelnen Möglichkeit $l_i$ wird dabei die mittlere logarithmierte Frequenz des entsprechenden Abschnitts zugewiesen. Der Möglichkeit $l_3$ ist also der dritte Abschnitt des

4

logarithmierten Frequenzbereichs zugeordnet, so daß die dritte Möglichkeit $l_3$ durch mit mittlere logarithmierte Frequenz log $f_3$ repräsentiert wird.

Sind die vorgegebenen Möglichkeiten die Werte eines Einstellbereichs eines bestimmten Parameters p, so erfolgt die Zuordnung der kontinuierlichen oder quasi kontinuierlichen Parameterwerte in entsprechender Weise, wie in Figur 3 dargestellt ist. Dem kleinsten und größten Parameterwert $p_{min}$, $p'_{min}$ bzw. $p_{max}$, $p'_{max}$ des jeweiligen Einstellbereichs wird die kleinste bzw. größte logarithmierte Frequenz log $f_{min}$ bzw. log $f_{max}$ linear zugeordnet.

Sobald die Zuordnung des dem Benutzer zur Verfügung stehenden Tonhöhenbereichs erfolgt ist, kann die Auswahl mit Hilfe des erfindungsgemäßen Verfahrens erfolgen.

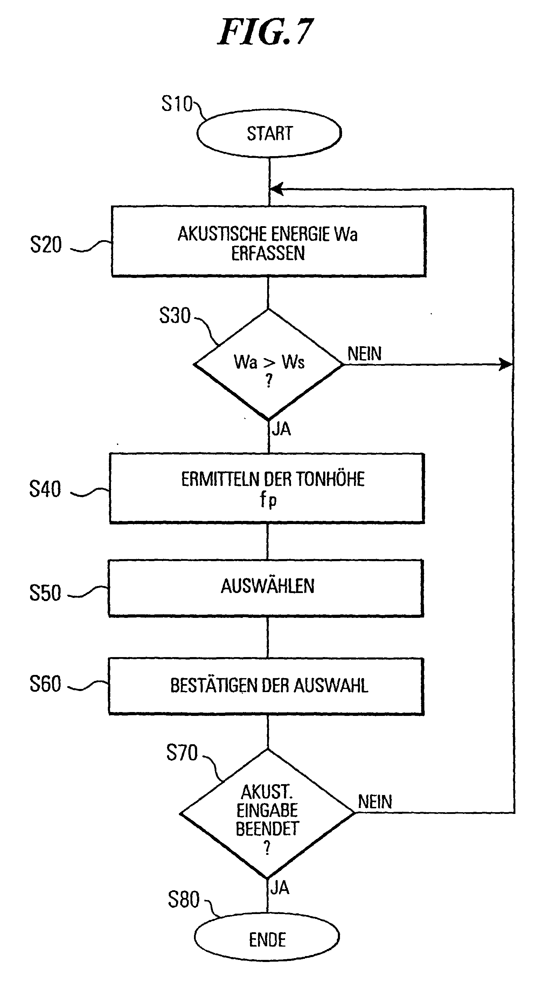

Wie in Figur 7 dargestellt, wird nach dem Start (Schritt S10) im Schritt S20 die vom Mikrophon 12 erfaßte akustische Energie Wa in der Schwellwertschaltung 13 mit einem Schwellwert Ws verglichen, um einen Laut in ei-nem allgemeinen Geräuschpegel zu erkennen. Der Schwellwert Ws kann dabei vom Benutzer aufeinen festen Wert einstellbar sein. Es ist aber auch denkbar, den Schwellwert automatisch an einen Geräuschpegel anzupassen, wodurch eine Fehleinstellung durch den Benutzer sicher ausgeschlossen wird.

Wird im Schritt S30 festgestellt, daß die erfaßte akustische Energie Wa nicht größer als der Schwellwert Ws ist, so kehrt das Verfahren zum Schritt S20 zurück und fährt fort die akustische Energie zu erfassen. Sobald ein vom Benutzer gesungener Laut erfaßt wird, wird im Schritt S30 festgestellt, daß dessen akustische Energie Wa größer ist als der Schwellwert Ws und das empfangene Signal wird von der Schwellwertschaltung 13 an die Lauterkennungsschaltung geliefert, die die Tonhöhe als Tonhöhenfrequenz $f_p$ im Schritt S40 ermittelt.

Die Ermittlung der Tonhöhe eines Lauts erfolgt beispielsweise mit Hilfe des sogenannten SIFT (Simplified Inverse Filter Tracking) Algorithmus, der besonders gut für relativ hohe Frauenstimmen geeignet ist, während für relativ tiefe männliche Stimmen die sogenannte Cepstrum Tonhöhenabschätzung (Cepstrum Pitch Estimation) eingesetzt wird. Diese Verfahren sind dem zuständigen Fachmann vertraut und beispielsweise In dem Lehrbuch "Voice and Speech Processing", Thomas W. Parsons, NewYork, 1986, McGraw-Hill Book Company, erläutert.

Die ermittelte Tonhöhenfrequenz $f_p$ wird in geeigneter Form zur Steuereinheit 10 geliefert, die die zugeordnete Möglichkeit $l_i$ oder den entsprechenden Parameterwert auswählt. Das von der Lauterkennungsschaltung 14 gelieferte Tonhöhensignal $f_p$ wird, falls es nicht bereits in digitaler Form vorliegt, digitalisiert und dann einer Filterung entsprechend Figur 4 unterzogen, bei der eine Eingangsfrequenz f unterhalb oder oberhalb des eingestellten Frequenzbereichs $f_{min}$ bis $f_{max}$ auf die kleinste oder größte Frequenz $f_{min}$ bzw. $f_{max}$ des Frequenzbereichs gesetzt wird. Die in dieser Weise gefilterte Tonhöhenfrequenz $f'_p$ ermöglicht dann nach dem Logarithmieren die eindeutige Auswahl einer Möglichkeit $l_i$, p ($f'_p$) aus einer Vielzahl von vorgegebenen Möglichkeiten im Schritt S50. Nach dem Auswählen der Möglichkeit $l_i$, p ($f'_p$) wird die Auswahl im Schritt S60 bestätigt. Die Bestätigung erfolgt dabei beispielsweise in der Weise, daß der erkannte Ton von der Steuereinheit 10 über den Lautsprechertreiber 18 und den Lautsprecher 17 ausgegeben wird. In diesem Fall ist es zweckmäßig, wenn gleichzeitig noch durch die Wiedergabe des höchsten und tiefsten Tons des eingestellten Tonhöhenbereichs die Lage der erkannten Tonhöhe des Lauts akustisch veranschaulicht wird.

Eine andere oder zusätzliche Möglichkeit zur Bestätigung der Auswahl besteht darin, daß die ausgewählte Möglichkeit auf der optischen Anzeige-einheit 16 angezeigt wird. Wenn die erfolgte Auswahl in dieser Weise optisch bestätigt wird, ist es besonders zweckmäßig, wenn gleichzeitig die erkannte Tonhöhe ausgegeben wird, so daß der Benutzer weiß, von welcher Tonhöhe aus er einen höheren oder niedrigeren Ton singen muß, um eine gewünschte Auswahl zu treffen, die entsprechend der vorgegebenen Ordnung hinter oder vor der tatsächlich ausgewählten Möglichkeit liegt.

Ferner kann, insbesondere wenn es sich bei den vorgegebenen Möglichkeiten um Namen oder Steuerbefehle handelt, als Bestätigung der Auswahl der ausgewählte Name bzw. der ausgewählte Steuerbefehl über den Lautsprecher 17 angesagt werden.

Sobald die Auswahl im Schritt S60 bestätigt wurde, wird im Schritt S70 überprüft, ob die akustische Eingabe beendet ist. Falls dies der Fall ist, wird die ausgewählte Möglichkeit für weitere Steuerungszwecke bereitgestellt und das beschriebene Verfahren im Schritt S80 beendet. Anderenfalls wird nach dem nächsten Erfassen eines Lauts in den Schritten S20, S30 dessen Tonhöhe im Schritt S40 festgestellt, um die Auswahl entsprechend des geänderten Lauts erneut durchzuführen.

Ist die ausgewählte Möglichkeit beispielsweise ein Name einer Telefonliste, so kann aufgrund der erfolgten Auswahl die diesem Namen zugeordnete Telefonnummer auf ein manuelles oder akustisches Startsignal hin gewählt werden. Handelt es sich andererseits bei der ausgewählten Möglichkeit um einen Steuerbefehl für eine andere elektronische Einrichtung, beispielsweise für einen PC, so kann dieser Befehl entweder unmittelbar oder über eine entsprechende Bestätigung vom Benutzer ausgeführt werden. Handelt es sich um einen ausgewählten Parameterwert so kann dieser bei-spielsweise über einen Steuerausgang 19 der Steuereinheit 10 zum Einstellen an eine entsprechende Einrichtung geliefert werden.

Um ein echtes Rollen durch eine geordnete Liste oder durch entsprechende Parameterwerte akustisch zu ermöglichen, wird die Tonhöhe $f_p$ in kurzen Abständen ermittelt und festgestellt, ob der Ton ansteigt, abfällt oder konstant bleibt. Dementsprechend wird durch die Liste der vorgegebenen Möglichkeiten wie beim Scrollen gesucht, indem die einzelnen Möglichkeiten in aufsteigender oder absteigender Folge entsprechend der ansteigenden oder abfallenden Tonhöhe sequentiell angezeigt werden.

Kurzfristige Ausreißer wie bei A in Figur 5 dargestellt, werden beispielsweise durch eine geeignete Tiefpaßfilterung, nicht lineare Medianfilterung oder andere Glättungsverfahren unterdrückt.

Stehen mehrere Listen und/oder Parameter zur Verfügung, aus denen einzelne Möglichkeiten bzw. Parameterwerte ausgewählt werden sollen, so ist es möglich, den einzelnen Listen eine mit der menschlichen Stimme veränderbare Charakteristik eines Lauts, beispielsweise den Klang und den einzelnen Möglichkeiten jeder Liste, wie oben beschrieben, eine andere veränderbare Charakteristik eines Lauts, nämlich die Tonhöhe zuzuordnen. Obwohl es auch denkbar ist, zur Auswahl der Listen die Tonhöhe zu variieren um dann zur Auswahl einer Möglichkeit aus der gewählten Liste den Klang eines Lautes zu verändern, ist es zweckmäßig, zur Auswahl der Listen wie beschrieben den Klang zu verwenden.

Bei einer geringen Anzahl von Listen und/oder Parametern, also z.B. bei einer Anzahl $\leq 8$ kann jeder Liste bzw. jedem Parameter ein Vokal oder Umlaut zugeordnet werden.

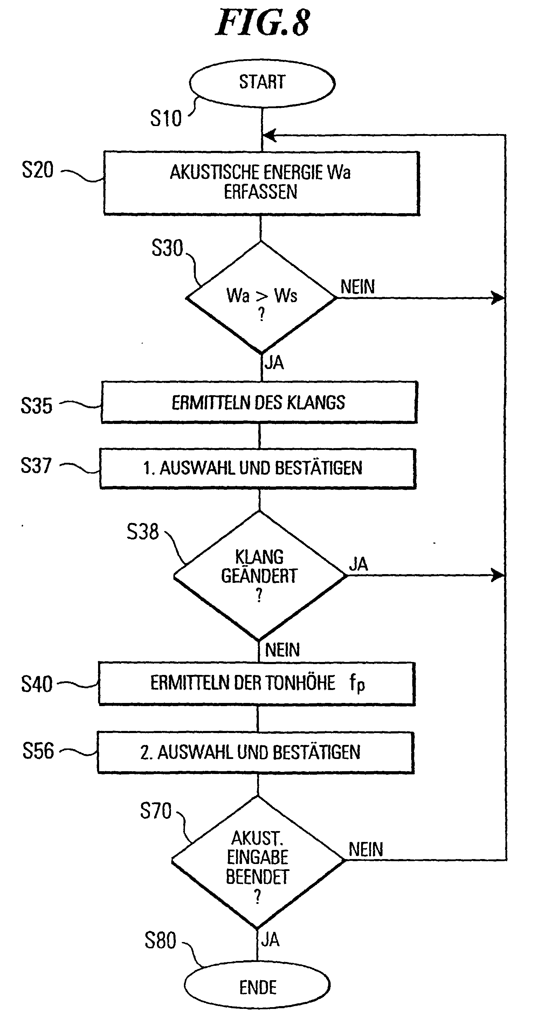

Um also aus mehreren Listen und/oder Parametern zunächst eine Liste oder einen Parameter und dann eine Möglichkeit oder einen Parameterwert aus dieser Liste bzw. diesem Parameter auszuwählen, wird, wie in Figur 8 dargestellt, nach dem Start des Verfahrens im Schritt S10 zunächst wieder die akustische Energie Wa im Schritt S20 erfaßt, um im Schritt S30 durch einen Vergleich der akustischen Energie Wa mit einer Schwelle Ws festzustellen, ob ein Laut vorliegt. Ist dies der Fall, so erfolgt im Schritt S35 die Ermittlung des Klangs des Lauts und im Schritt S37 die entsprechende Auswahl der Liste sowie die Bestätigung. Im Schritt S38 wird dann festgestellt, ob sich der Klang des Lauts weiter ändert. Ist dies der Fall, so wird nach dem erneuten Erfassen der akustischen Energie mit der Ermittlung des Klangs fortgefahren, um erneut eine Liste auszuwählen und zu bestätigen. Ändert sich der Klang nicht mehr, so wird im Schritt S40 wie oben bereits beschrieben die Tonhöhenfrequenz $f_p$ ermittelt, um anschließend im Schritt S56 die Auswahl aus der Liste oder den Parameterwerten zu treffen und zu bestätigen.

Bei dieser zweidimensionalen Auswahl, die hier in ihrer einfachsten Form beschrieben wurde, ist es auch möglich, nach Änderung der Tonhöhe wie-derum den Klang des Lauts zu ändern, so daß zwischen den einzelnen Listen und/oder Parametern hin und her gewechselt werden kann, wie dies auch mit einer mechanisch optischen Maus möglich ist.

Um eine echte zweidimensionale akustische Maus zu realisieren, mit der gleichzeitig zwei Parameter ausgewählt werden können, wird dem einen Parameter ein erster und dem anderen ein zweiter Vokal zugewiesen. Jedem Vokal wird dann, wie in Figur 6 dargestellt, ein Tonhöhenbereich zugewiesen, dem ein benötigter Parameterbereich entspricht. Jedem Vektor log $\mathbf{f}$ entspricht ein Parametervektor

$$\mathbf{p} = (p_1, p_2),$$

wobei $p_{1,min} \leq p_1 \leq p_{1,max}$ und $p_{2,min} \leq p_2 \leq p_{2,max}$ gilt. Der Frequenzvektor log $\mathbf{f}$ innerhalb des erlaubten Vierecks ergibt sich durch eine Mischung der beiden Vokale. Dabei ist der Betrag $|\log \mathbf{f}|$ des Vektors durch die Tonhöhe $f_p$ des Lauts und der Winkel $\alpha$ des Vektors durch die Ähnlichkeit der Formant-Frequenzen des Lauts mit denen des ersten und zweiten Vokals gegeben. Durch Ändern der Tonhöhe $f_p$ und durch Verschieben des Klangs vom einen Vokal zum anderen läßt sich jeder Punkt in dem er laubten Viereck akustisch auswählen, so daß auch auf diese Weise das entsprechende Parameterpaar ausgewählt werden kann.

Um die klangliche Ähnlichkeit des aktuellen Lauts mit den beiden Vokalen zu ermitteln, wird der Laut beispielsweise durch einen Formant-Vektor $\mathbf{F}$ charakterisiert. Unter den Formanten versteht man die Resonanzfrequenzen des menschlichen Vokaltraktes beim Aussprechen eines stimmhaften Lautes. Es werden die ersten N Formaten des Lauts, also die niedrigsten Resonanzfrequenzen, typischerweise die ersten drei, berücksichtigt. In entsprechender Weise werden die beiden Vokale durch Formant-Vektoren $\mathbf{F}_1$ und $\mathbf{F}_2$ charakterisiert, die ebenfalls die ersten N. typischerweise wiederum die ersten N = 3 Formanten berücksichtigen.

Die Ähnlichkeit S läßt sich dann wie folgt berechnen

$$S = \frac{|\mathbf{F} - \mathbf{F}_1| - |\mathbf{F} - \mathbf{F}_2|}{|\mathbf{F} - \mathbf{F}_1| + |\mathbf{F} - \mathbf{F}_2|} \tag{1}$$

Für den Fall, daß der aktuelle Laut gleich dem ersten Vokal ist, wird

$$F = F_1,$$

so daß S = -1 ist. Entsprechend ergibt sich für einen Laut, der dem zweiten Vokal entspricht mit

$$F = F_2$$

die Ähnlichkeit S = 1. Liegt der aktuelle Laut zwischen den beiden Vokalen so ergibt sich für die Ähnlichkeit ein Wert zwischen -1 und +1.

Zur Realisierung einer echten zweidimensionalen akustischen Maus werden also nur stimmhafte Laute verwendet und die Resonanzfrequenzen des Vokaltraktes der Laute für die Steuerung ausgewertet.

Im einzelnen wird zunächst der in Figur 6 dargestellt zweidimensionale Steuerbereich dadurch festgelegt, daß ein Benutzer zunächst einen ersten Vokal mit minimaler bis maximaler Tonhöhe $f_{min}$ bzw. $f_{max}$ ausspricht. Für diesen Vokal, der beispielsweise in Figur 6 die horizontale Achse festlegt, wird dann der Formantvektor

$$F_1 = (F_{1.1}, F_{1.2}, F_{1.3})^T$$

berechnet und gespeichert. Der Formantvektor

$$F_2 = (F_{2.1}, F_{2.2}, F_{2.3})^T$$

für den zweiten Vokal wird in entsprechender Weise bestimmt und ebenfalls gespeichert.

Wird nun zur Steuerung ein bestimmter Laut, der zwischen diesen beiden Vokalen liegt und eine bestimmte Tonhöhe aufweist, ausgesprochen, so wird das Sprachsignal, also das Ausgangssignal vom Mikrophon 12 in der Lauterkennungschaltung 14 an einen Tonhöhenerkennungsschaltkreis 20 angelegt, um die Tonhöhenfrequenz $f_p$ des Lauts zu bestimmen. Das die Tonhohenfrequenz $f_p$ repräsentierende Ausgangssignal des Tonhöhenerkennungsschaltkreises 20 wird an eine Logarithmierschaltung 21 geführt, um den Betrag | log f | des Frequenzvektors zu bestimmen.

Das Sprachsignal wird außerdem an einen Formantvektorermittlungskreis 22 angelegt, um dann den Formantvektor

$$F = (F_1, F_2, F_3)^T$$

zu ermitteln. Dann wird die Ähnlichkeit S mittels einer Ähnlichkeitsberechnungsschaltung 23 gemäß Gleichung 1 unter Berücksichtigung der zuvor abgespeicherten Formantvektoren $F_1$ und $F_2$ berechnet. Das der Ähnlichkeit S entsprechende Ausgangssignal der Ähnlichkeitsberechnungsschaltung 23, das zwischen -1 und +1 variiert, wird in einer Addierschaltung 24 mit 1 addiert, so daß immer ein positiver Wert S+1 vorliegt. Aus dem Wert S+1 wird dann durch Multiplikation mit $\pi/4$ im Multiplizlerkreis 25 der Winkel $\alpha$ berechnet, der zwischen 0 und $\pi/2$ liegt.

Somit sind die Polarkoordinaten | log f | und $\alpha$ des Frequenzvektors log f im erlaubten zweidimensionalen logarithmischen Frequenzraum bestimmt. Die kartesischen Koordinaten lassen sich, falls dies erforderlich ist, in bekannter Weise aus den Polarkoordinaten berechnen. Es gilt dann:

$$\log f = (\,|\log f\,|\, \cdot \cos\alpha,\ |\log f\,|\cdot \sin\alpha)^T,$$

wobei $\alpha = \pi/4 \cdot S$ ist.

Die Verwendung von stimmhaften Lauten für die Steuerung unter Benutzung der Formanten zur Berechnung des Frequenzvektors, also zur Berechnung der gewünschten angesteuerten Position im logarithmischen Frequenzraum hat den Vorteil, daß auch in einer relativ lauten Umgebung noch eine relativ genaue Tonhöhen- und Klangerkennung möglich ist, so daß Fehlsteuerungen durch Umgebungsgeräusche weitgehend ausgeschlossen werden können.

**Patentansprüche**

1.    Verfahren zum Steuern einer elektronischen Einrichtung, insbesondere einer Mobilstation eines Mobilfunknetzes,

EP 0 951 162 A2

bei dem ein Laut variiert wird, um unter einer Mehrzahl von vorgegebenen Möglichkeiten zu wählen.

2. Verfahren nach Anspruch 1, **dadurch gekennzeichnet**, daß die vorgegebenen Möglichkeiten einem einstellbaren Tonhöhenbereich zwischen einem tiefsten und einem höchsten Ton sequentiell zugeordnet sind und daß der Laut im eingestellten Tonhöhenbereich in seiner Tonhöhe variiert wird.

3. Verfahren nach Anspruch 1 oder 2, **dadurch gekennzeichnet**, daß die vorgegebenen Möglichkeiten verschiedenen Klängen zugeordnet sind und daß der Laut in seinem Klang variiert wird.

4. Verfahren nach Anspruch 2 und 3, **dadurch gekennzeichnet**, daß verschiedene Gruppen von vorgegebenen Möglichkeiten verschiedenen Klängen zugewiesen sind, während die einzelnen Möglichkeiten jeder Gruppen einzelnen Tonhöhen in einem eingestellten Tonhöhenbereich zugeordnet sind, und daß zum Auswählen einer Gruppe von vorgegebenen Möglichkeiten zunächst der Klang und dann zum Auswählen einer Möglichkeit aus der ausgewählten Gruppe die Tonhöhe des Lautes variiert wird.

5. Verfahren nach Anspruch 1, **dadurch gekennzeichnet**, daß zum Auswählen einer Möglichkeit aus einer Mehrzahl von zweidimensional vorliegenden Möglichkeiten gleichzeitig der Klang und die Tonhöhe des Lautes variiert werden.

6. Verfahren nach einem der vorstehenden Ansprüche, **dadurch gekennzeichnet**, daß die vorgegebenen Möglichkeiten Steuerbefehle sind, die gruppenweise in Menüs zusammengefaßt sind.

7. Verfahren nach einem der vorstehenden Ansprüche, **dadurch gekennzeichnet**, daß die vorgegebenen Möglichkeiten Daten sind, die in Listenform gespeichert sind.

8. Verfahren nach einem der vorstehenden Ansprüche, **dadurch gekennzeichnet**, daß die zu wählenden Möglichkeiten von einstell- und auswählbaren Werten eines oder mehrerer Parameter für den Betrieb der elektronischen Einrichtung gebildet werden.

9. Verfahren nach einem der vorstehenden Ansprüche, **dadurch gekennzeichnet**, daß die erfolgte Auswahl einer Möglichkeit durch Wiederholung des die Auswahl festlegenden Lauts durch die elektronische Schalteinrichtung bestätigt wird.

10. Verfahren nach Anspruch 8, **dadurch gekennzeichnet**, daß bei der Bestätigung der Auswahl zusätzlich zum Bestätigungslaut der eingestellte Tonhöhen- und/oder Klangbereich durch deren Randwerten entsprechenden Laute oder Töne angezeigt wird.

11. Verfahren nach Anspruch 1 bis 8, **dadurch gekennzeichnet**, daß die erfolgte Auswahl durch Anzeige oder Ansage der ausgewählten Möglichkeit bestätigt wird.

12. Verfahren nach einem der vorstehenden Ansprüche, **dadurch gekennzeichnet**, daß zunächst aus einer Vielzahl von Möglichkeiten eine Gruppe von einzelnen Möglichkeiten durch Laut-Variation ausgewählt wird, und daß dann ausgehend von der ausgewählten Gruppe von Möglichkeiten die gewünschte Möglichkeit ausgewählt wird.

13. Verfahren nach Anspruch 12, **dadurch gekennzeichnet**, daß die Auswahl der gewünschten Möglichkeit ausgehend von der vorausgewählten Gruppe von Möglichkeiten manuell erfolgt.

14. Verfahren nach einem der vorstehenden Ansprüche, **dadurch gekennzeichnet**, daß zum Erkennen einer Auswahl zunächst die akustische Energie erfaßt und mit einem Referenzwert verglichen wird, um einen Laut als solchen zu erkennen, und daß nach Erkennen eines Lautes dessen Tonhöhe und/oder dessen Klang festgestellt wird, um dann in Abhängigkeit davon die zugeordnete Möglichkeit anzuzeigen oder anzusagen.

15. Verfahren nach Anspruch 14, **dadurch gekennzeichnet**, daß die Tonhöhe und/oder der Klang des Lautes fortlaufend festgestellt wird, um die vorgegebenen Möglichkeiten sequentiell entsprechend der Tonhöhen- oder Klangänderung anzuzeigen oder zur Anzeige bereitzustellen.

16. Verfahren nach Anspruch 1 bis 15, **dadurch gekennzeichnet**, daß der Tonhohen- und/oder Klangbereich für jeden Benutzer individuell einstellbar ist.

**17.** Verfahren nach einem der vorstehenden Ansprüche, **dadurch gekennzeichnet**, daß zur Auswahl einer Möglichkeit ein stimmhafter Laut verwendet wird.

**18.** Verfahren nachAnspruch 17, **dadurch gekennzeichnet**, daß für den Laut Formantvektoren bestimmt werden, um dessen Klang zu beschreiben.

**19.** Verfahren nach Anspruch 17 oder 18, **dadurch gekennzeichnet**, daß die Ähnlichkeit S des aktuellen Klangs mit zwei vom Benutzer zuvor festgelegten Vokalen unter Verwendung von Formantvektoren durch die folgende Gleichung

$$S = \frac{|\mathbf{F} - \mathbf{F}_1| - |\mathbf{F} - \mathbf{F}_2|}{|\mathbf{F} - \mathbf{F}_1| + |\mathbf{F} - \mathbf{F}_2|}$$

berechnet wird, wobei $\mathbf{F}$ der Formantvektor des aktuellen Klangs, $\mathbf{F}_1$ und $\mathbf{F}_2$ die Formantvektoren des ersten bzw. zweiten vom Benutzer festgelegten Vokals sind.

# *FIG.1*

# *FIG.6*

## FIG.2

## FIG.3

## FIG.4

## FIG.5

# FIG.7

S10 — START

S20 — AKUSTISCHE ENERGIE Wa ERFASSEN

S30 — $Wa > Ws$ ? — NEIN

JA

S40 — ERMITTELN DER TONHÖHE $fp$

S50 — AUSWÄHLEN

S60 — BESTÄTIGEN DER AUSWAHL

S70 — AKUST. EINGABE BEENDET ? — NEIN

JA

S80 — ENDE

# FIG.8

START
S10

S20 — AKUSTISCHE ENERGIE Wa ERFASSEN

S30 — Wa > Ws ? — NEIN

JA

S35 — ERMITTELN DES KLANGS

S37 — 1. AUSWAHL UND BESTÄTIGEN

S38 — KLANG GEÄNDERT ? — JA

NEIN

S40 — ERMITTELN DER TONHÖHE $f_p$

S56 — 2. AUSWAHL UND BESTÄTIGEN

S70 — AKUST. EINGABE BEENDET ? — NEIN

JA

S80 — ENDE

# FIG.9

EP 0 951 162 A2